# EUROPEAN PATENT SPECIFICATION

(11) **EP 2 150 391 B1**
(45) Date of publication and mention of the grant of the patent: **08.06.2011**
(21) Application number: 08749832.5
(22) Date of filing: 29.04.2008
(51) Int. Cl.: B29C 53/28, B65D 75/38

(54) **SOAP BAR PACKAGE**
VERPACKUNG FÜR EIN SEIFENSTÜCK
EMBALLAGE DE PAIN DE SAVON

(30) Priority: 04.06.2007 IN MU10482007; 30.07.2007 EP 07113443
(43) Date of publication of application: 10.02.2010
(73) Proprietor: Unilever PLC, London, Greater London EC4Y 0DY (GB); Unilever N.V., 3012 AL Rotterdam (NL)
(72) Inventor: CHAKRABORTI, Soumya, Mumbai 400 099 (IN); SOHONI, Niranjan, Bhaskar, Dist. Kolhapur 416 123 (IN)
(74) Representative: Elliott, Peter William
(86) International application number: PCT/EP2008/055219
(87) International publication number: WO 2008/148611

(56) References cited:
- EP-A- 0 239 340
- WO-A-03/016168
- GB-A- 533 932
- GB-A- 1 116 762
- US-A- 4 912 910
- US-A1- 2005 035 008

## Description

### FIELD OF INVENTION

The present invention relates to packaging of detergent bars, more particularly to packaging of individual detergent or soap bars using stiffeners.

The invention has been developed primarily for use in packaging of detergent bars and will be described hereinafter with reference to this application. However, it will be appreciated that the invention is not limited to this particular field of use.

### BACKGROUND AND RELATED ART

Any discussion of the prior art throughout the specification should in no way be considered as an admission that such prior art is widely known or forms part of the common general knowledge in the field.

Detergent bars, especially soap bars, are made in various fanciful shapes to attract consumers. Soap bars that essentially are rectangular can readily be wrapped in conventional packages having a combination of a stiffener and a wrapper. The stiffener is included to provide additional strength to the package. The soap bar normally fully supports the wrapper as the wrapper takes the shape of the soap bar. However, when the soap bar is not essentially rectangular, and has curved edges, the package parts usually must provide some of the shape to the package.

An individual bar of soap or detergent after being packaged in a wrapper is then packed in larger cartons before being despatched from the factories. These larger packs are generally referred to as "Corrugated Cartons for Local Delivery" (CLD). These cartons are then transported in bulk to retailing units. The cartons are generally transported in trucks.

During transportation and storage, the packaged soap bar is subjected to mechanical stress. Therefore, the individual packages undergo deformation and damage at several places before reaching the retailing outlets. Such deformed packs are not suitable for display and are generally not acceptable to consumers too. In packages where stiffeners are included, it is observed that the extent of deformation is comparatively lesser. However, it has also been observed by the present inventors that commercially available stiffeners have high stiffness along the machine-direction, but comparatively little stiffness along the cross-direction thereof, which results in packages or wrappers having crushed or deformed lateral sides and/or edges. This particularly is the case in the area of the ends of the soap bar package where there is a transition from a top, bottom and side surface to the folded end surfaces.

One way to solve this problem is by using thicker stiffeners, i.e. ones having higher grammage. Their benefits would normally be offset by the corresponding increase in cost. Another way is to use a corrugated sheet of paper as a stiffener. Their use would, however, lead to an increase in the overall bulk of the pack. In addition, stiffeners made of corrugated sheets may be prone to tear off at their open corrugated ends, after the package is deformed at the edges.

An attempt has been made in the past to solve this problem.

GB 1 116 762 discloses a method and apparatus for the manufacture of corrugated web materials, with particular application to the manufacture of battery separators.

US 4,912,910 discloses an apparatus and method for making a unique corrugated spacer to provide snug storage, such as in the packaging of cigarettes.

GB 533 932 discloses a form of packaging for use in packaging fragile articles comprising corrugated sheets of cardboard which is adhered to a flat sheet of material or another corrugated sheet to provide tubular spaces between the sheets. The tubular spaces are filled with granular packing material.

EP 0 239 340 discloses a packaging for a bar of soap which consists of an inner tubular liner within an outer liner. The material of the inner liner is folded over at opposite edges to form increased thickness at opposite ends of the pack.

WO 03/016168 discloses a soap packaged using a single plastic film wrapper. The packaging does not require a reinforcing element stiffener and instead uses a plastic with sufficient thickness to form and maintain a generally rectangular shape while at the same time can be folded to form end side panels without the need for optional fold enhancement techniques.

US 2005/0035008 (Colgate Palmolive) describes a wrapper for a soap bar made from a single sheet of material having gusseted end-folds to provide increased rigidity to the pack. This is produced by forming the gusseted end-folds where extra reinforcement is desired. The gussets produce a three layered structure and act as reinforcement bands that reduce deformation of the ends of the pack.

As can be seen here, US '008 relates to packages that essentially aim at achieving additional strength by using extra folds of the wrapper which would require modification of the process and would also lead to an increase the cost.

There exists the need for stiffeners having relatively higher stiffness along the cross-direction so that deformation of packages along the edges and ends that occur while transportation, storage and handling can be prevented or reduced.

### OBJECT OF THE INVENTION

It is an object of the present invention to provide a package comprising a stiffener that has relatively high stiffness along the cross direction.

Conventional single / multiple ply stiffeners used in envelope wrapped products such as soaps and detergent bars, have anisotropic stiffness in machine-direction (MD) and cross-direction (CD), where the stiffness in machine-direction is greater than stiffness in cross-direction due to grain direction of the stiffener. The present invention aims at modifying the cross-direction stiffness by suitable mechanical changes in the stiffener. This makes the stiffener characteristics more suitable for retaining the envelope wrapped shape of the package to a significant extent until the end consumer point. The present inventors have found that planar stiffeners having a plurality of ribs along the cross-direction surprisingly show relatively higher stiffness in the cross-direction, when compared to normal stiffeners. Such stiffeners when used in packaging soap or detergent bars would be less prone to deformation along the lateral sides and edges of the package.

### SUMMARY OF THE INVENTION

The present invention relates to a package comprising a non-corrugated planar stiffener for use in packaging of detergent bars, the stiffener having a machine-direction and perpendicular thereto, a cross-direction, characterised in that the stiffener has plurality of ribs along its cross-direction.

Preferably the angle of the ribs with the cross-direction of the stiffener is from 0° to 45°, more preferably it is 0°. Preferably the distance between the adjacent ribs of the stiffener ranges from 0.5 mm to 2 mm.

The claimed package comprises a stiffener being suitable for surrounding the bar along the longitudinal extent thereof. Preferably the package comprises a wrapper overlaying the stiffener.

The present invention also relates to a packaged detergent bar being wrapped in a package in accordance with the invention.

The term "detergent bar" is used herein to indicate a bar or tablet of non-soap or soap-based detergents, which are primarily used for washing clothes, and a bar or tablet of soap, which is used for personal washing.
The terms "soap" and "detergent" have been used interchangeably in the specification.

### Stiffener

The term planar is used to indicate that the stiffener is essentially flat, unlike a sheet of corrugated paper.

Preferably, the stiffener is made of coated or uncoated paper. It may also be made of coated or uncoated paper board. It may also be made of plastic or a laminate of paper and plastic, generally known as polycoated paper. More preferably, it is made from paper board, coated on one side with a Polyethylene coating. Polycoated papers are advantageous as in addition to providing strength, they also prevent or reduce loss of aroma/perfume and volatile components from the packaged bar.

Stiffeners have two directions based on the formation on the paper board manufacturing machines. These are known as the machine-direction (MD) and cross-direction (CD). Machine-direction refers to the direction in which the paper travels and it has higher stiffness (usually measured in Taber units) as compared to the cross-direction. The cross-direction is perpendicular to the machine-direction.

It is especially preferred that the stiffener is free from memory so that it does not unfold from a roll on which it was stored and so that it can be folded around the bar of soap, preferably around the entire peripheral longitudinal surface, of the detergent bar, after which the stiffener will remain in the folded condition so as to define a sleeve surrounding the bar. It is preferred that the stiffener entirely surrounds the detergent bar along its longitudinal extent, so as to define a sleeve of the stiffener, housing the detergent bar. It is preferred that the lateral sides of the bar of soap are not surrounded by the stiffeners, so that the bar can be easily removed for use.

It is preferred that the angle of the ribs with the cross-direction of the stiffener is from 0° to 45° and more preferably from 0° to 30°. It is most preferable that this angle is 0°.

Preferably the distance between two adjacent ribs ranges from 0.5 mm to 2 mm. More preferably the distance is 1 mm.

The cross- direction stiffness of the stiffener is from 10 to 40 Taber Units. Preferably it is from 15 to 30 Taber units.

It is preferred that the grammage of the stiffener is from 90 g/m² to 200 g/m², more preferably from 120 g/m² to 170 g/m². It is however most preferable to use low grammage stiffeners from 130 g/m² to 150 g/m². However, a higher grammage stiffener can be used if higher cross-direction strength is sought.

It is preferred that the thickness of the stiffeners is from 120µ to 400µ. However it is preferred that the thickness is from 150µ to 300µ. It is most preferable to use stiffeners having thickness between 250µ and 270µ.

The term "ribs" as used herein is meant to include equivalent terms such as "knurlings".

It is further preferred that the softening agent is low pressure steam.

It is preferred that the material of construction of the rollers is toughened /hardened steel or stainless steel with or without anti-stick coating.

Any suitable means of heating can be employed in the heating zone.
Generally, the heating zone has one or more heat radiators. Preferably the heating means is an electrical heater or an infrared heater.

### Wrapper

The wrapper is a film material comprising a paper core coated on each surface with a plastics material. However, preferably the wrapper is a film material which is entirely of plastics material, more preferably thermoplastics material.

The film material of the wrapper preferably has a thickness of from 5 to 50 microns.

Preferably, the wrapper, when wrapped around the bar of detergent and stiffener, has edge portions in overlapping relationship with one another. This allows those edge portions to be secured to one another. This can be achieved by application of an adhesive between various respective opposite surface regions, for example, by coating the adhesive at various regions of the edge portions, folding the wrapper and applying pressure. However, preferably, edge portions are secured to one another by heat sealing so that at least outer layers of the film material of the wrapper are preferably of heat sealable plastics material. Moreover, the edge portions are preferably kept free of printing material.

Preferably, the film material of the wrapper comprises at least one layer of a Biaxially Oriented PolyPropylene (BOPP) capable of heat sealing. More preferably the film is a laminate of a Biaxially Oriented PolyPropylene (BOPP) layer with a low density polyethylene film.

Preferred examples of alternative constructions of the wrapper are:
(a) a laminate of a heat sealable film an internal face of which may bear print material and between which a laminating, for example hot melt, adhesive is applied;
(b) a special BOPP film which is capable of heat sealing; and
(c) a laminate of a PET (Polyethyleneterepthalate), nylon or low density polyethylene film adhered, for example with a hot melt adhesive, to a heat sealable film.

A package according to the invention containing a soap bar can be produced by a method comprising the steps of: folding around at least a longitudinal extent of the bar of soap, a stiffener, so that it is wrapped laterally around the bar; wrapping each of the bar of soap and stiffener with a wrapper in a manner such as entirely to surround each of the bar of soap and stiffener and to provide overlapping edge portions of the wrapper; and
adhering together, preferably by heat sealing, at least respective parts of the overlapping edge portions to secure the wrapper in position.

### BRIEF DESCRIPTION OF THE DRAWINGS

A preferred embodiment of the invention will now be described, by way of example only, with reference to the accompanying drawings in which:
Figure-1 is the front view of an embodiment of a stiffener according to the invention.
Figure-2 is the front view of another embodiment of a stiffener.
Figure-3 is the isometric view of a packaged detergent bar in accordance with the invention.
Figure-4 is a schematic of a machine used for making the stiffeners according to the invention.

### DETAILED DESCRIPTION OF THE PREFERRED EMBODIMENTS

In all the figures, like numerals have been used to indicate like parts, components or features.

Referring to figure-1, the rectangular stiffener 1 has is plurality of ribs 2 that run parallel to the cross-direction (CD) and perpendicular to the Machine direction (MD), which have been shown with the help of arrows. The angle of the ribs with the cross-direction of stiffener 1 is 0°.

Figure-2 shows another embodiment of a stiffener 1. The angle of the ribs 2 with the cross-direction of the stiffener is 45°.

Referring now to figure-3 that shows the isometric view of a packaged detergent bar 3 according to the invention, the bar has longitudinal sides 4 and 5, and lateral sides 6 and 7. The wrapper 8 of the bar is folded over itself along the edges and is adhesively bonded to define the lateral flap 9. A portion of the wrapper is cut-away to show the plurality of ribs 2 on the stiffener 1 that lies beneath the wrapper 8.

Referring now to figure-4 that shows a schematic of an apparatus and a process of making the planar stiffeners having plurality of ribs along its cross-direction, a roll of normal (un-ribbed) stiffener made of paper, paper board or polycoated paper is loaded on the mandrel of the unwinder 10 and the same is unwound and pulled by a motor (14) controlled pair of rubber pinch roller 11a and a steel roller 12a. This pair keeps the sheet in a tensioned state. The intended frictional traction force to create the required pull is achieved by friction coefficient of the pair of rollers 11a and 12a, which is decided by the material of construction of the roller pair and normal force on rollers generated by the spring 13a. The sheet so unwound then passes through humidifying arrangement 15a and 15b where low-pressure steam is sprayed on the sheet, which acts as the softening agent. This prepares the sheet for ribbing. Ribbing is achieved by a specially profiled and spring loaded pressurized pair of counter-currently rotating grooved rollers 16a and 16b, pressurized by cylinder 17. The tangential speed of these rollers is decided by a separate driving gear pair (not shown). The stiffener then enters a heating zone where a pair of heaters 18a and 18b supply intense heat by use of Infrared radiators to dry-up and stabilize the deformation added to the stiffeners surface. The next pair of pinch roller 11b and steel roller 12b pulls the stiffener gently without causing any appreciable stretch, which is achieved by motor 19 controlled feedback loop which is part of the process. This loop monitors and controls the take-up velocity of the pair of rollers. Finally the winder 20 operates on tension control principle and tightly rewinds the stiffener. This is then sent to the wrapping machines. The entire operation is controlled with the control means 21.

The invention will now be explained with the help of following non-limiting examples.

### EXAMPLES

The Taber stiffness values of Stiffeners made according to the invention, as well as comparative stiffeners, i.e. without ribs were measured. The values have been compiled in tables 1-4 below. In all the tables, MD and CD represent the stiffness in Taber units of the Stiffeners in the Machine direction and Cross direction respectively.

**Table-1 - 130 g/m² stiffeners (without ribs)**

| **PLAIN** | **MD** | **CD** | **POLYCOATED** | **MD** | **CD** |
|---|---|---|---|---|---|
| Sample-1 | 17 | 8 | SAMPLE-1 | 13 | 8 |
| SAMPLE-2 | 18 | 6 | SAMPLE-2 | 18 | 8 |
| SAMPLE-3 | 20 | 6 | SAMPLE-3 | 15 | 6 |
| Sample-4 | 13 | 8 | SAMPLE-4 | 15 | 6 |
| SAMPLE-5 | 15 | 8 | SAMPLE-5 | 15 | 6 |
| AVERAGE | 16.6 | 7.2 | AVERAGE | 15.2 | 6.8 |

| | | | | | |
|---|---|---|---|---|---|
| *Average Thickness of 130 g/m² stiffeners: PLAIN - 196µ; POLYCOATED - 208µ | | | | | |

**Table-2: 150 g/m² stiffeners (without ribs)**

| **PLAIN** | **MD** | **CD** | **POLYCOATED** | **MD** | **CD** |
|---|---|---|---|---|---|
| SAMPLE-1 | 35 | 10 | SAMPLE-1 | 25 | 13 |
| SAMPLE-2 | 25 | 17 | SAMPLE-2 | 28 | 10 |
| SAMPLE-3 | 35 | 20 | SAMPLE-3 | 25 | 12 |
| SAMPLE-4 | 25 | 20 | SAMPLE-4 | 28 | 15 |
| SAMPLE-5 | 25 | 17 | SAMPLE-5 | 25 | 13 |
| AVERAGE | 29 | 16.8 | AVERAGE | 26.2 | 12.6 |

| | | | | | |
|---|---|---|---|---|---|
| *Average Thickness of 150 g/m² stiffeners: PLAIN - 233µ; POLYCOATED - 239µ | | | | | |

**Table-3: 175 g/m² stiffeners (without ribs)**

| PLAIN | MD | CD | POLYCOATED | MD | CD |
|---|---|---|---|---|---|
| SAMPLE-1 | 40 | 25 | SAMPLE-1 | 37 | 15 |
| SAMPLE-2 | 40 | 25 | SAMPLE-2 | 28 | 15 |
| SAMPLE-3 | 40 | 25 | SAMPLE-3 | 33 | 18 |
| SAMPLE-4 | 38 | 23 | SAMPLE-4 | 30 | 15 |
| SAMPLE-5 | 42 | 20 | SAMPLE-5 | 33 | 18 |
| AVERAGE | 40 | 23.6 | AVERAGE | 32.2 | 16.2 |

| | | | | | |
|---|---|---|---|---|---|
| *Average Thickness of 150 g/m² stiffeners: PLAIN - 277µ; POLYCOATED - 283p. | | | | | |

### Stiffness values of stiffeners according to the invention.

**Table-4: 130 g/m² polycoated stiffeners**

| SAMPLE | MD | AVERAGE | CD | AVERAGE |
|---|---|---|---|---|
| | 30 | 30 | 20 | 20 |
| SAMPLE-A | 40 | | 20 | |
| (500 psi) | 25 | | 20 | |
| | 25 | | 20 | |
| | 20 | 24 | 10 | 12.5 |
| SAMPLE-B | 30 | | 15 | |
| (400 psi) | 30 | | 15 | |
| | 15 | | 10 | |
| | 15 | 15 | 10 | 12.5 |
| SAMPLE-C | 15 | | 10 | |
| (300 psi) | 15 | | 10 | |
| | 15 | | 20 | |

The average thickness of 130 g/m² (Ribbed) stiffeners was 260µ. Distance between adjacent ribs was 1 mm. The angle of ribs was 0° with respect to the cross direction of the stiffener. The pressure of the grooved rollers through which the stiffeners were passed has been indicated in brackets.

The stiffeners were made of Rough cartridge board paper which can be obtained from Andhra Pradesh Paper Mills, Star Paper Mills or Century Paper Mills.

The paper was then extrusion coated with Polyethylene (10µ) by processes generally known in the art.

Thus it can be readily appreciated that the Cross Direction stiffness of the Stiffeners according to the invention (table 4, Sample-A) is relatively higher than stiffeners of table 1 to 3. It can also be appreciated that the stiffness increases as the pressure is increased. This therefore means that at a lower grammage, it is possible to have a stiffener that has relatively higher Taber stiffness in the cross-direction.

It will be appreciated that the illustrated examples, provide for a stiffener that has relatively high stiffness along the cross direction.

Although the invention has been described with reference to specific embodiments, it will be appreciated by those skilled in the art that variations and/or modifications may be made to the specific embodiments without departing from the scope of the invention as defined by the present claims.

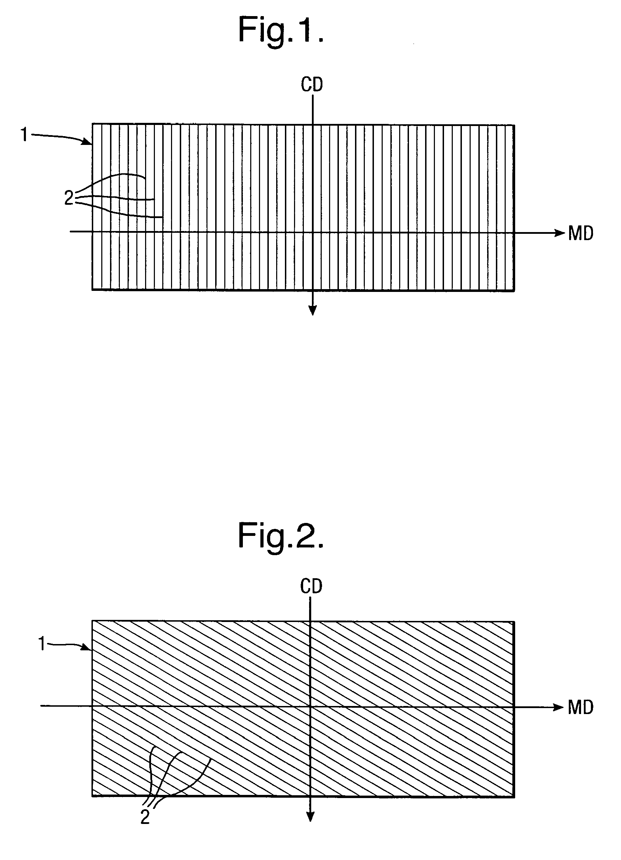

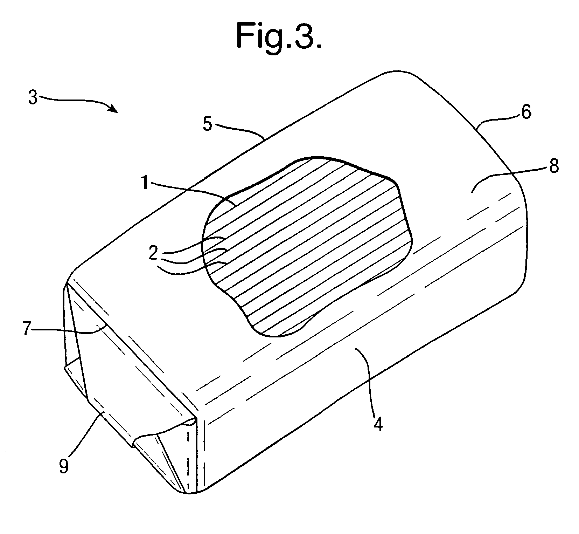

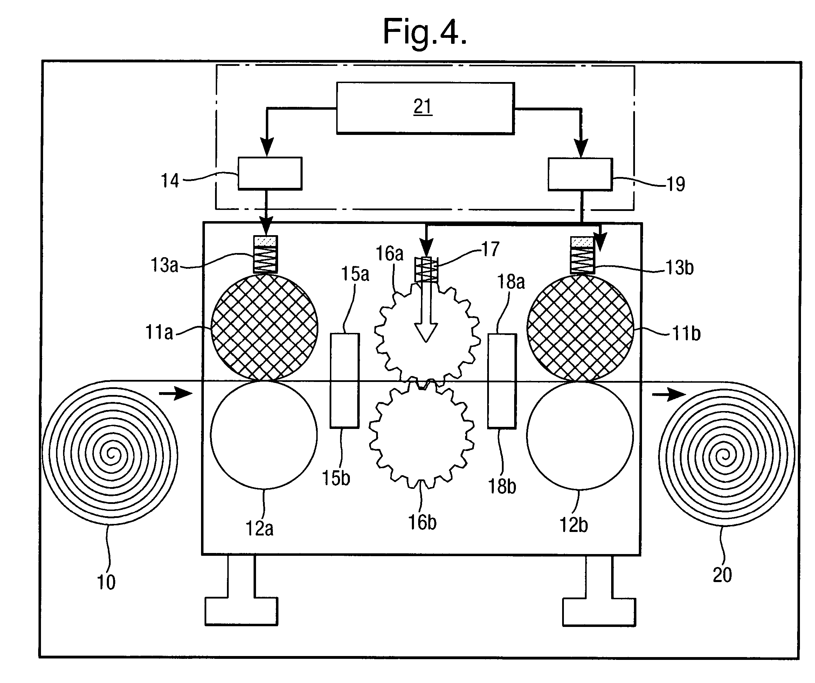

## Claims

1. A package for a detergent bar (3) comprising a non-corrugated planar stiffener (1) that is suitable for surrounding the bar along the longitudinal extent thereof, said stiffener having a machine-direction (11D) and perpendicular thereto a cross-direction (CD), **characterised in that** said stiffener has plurality of ribs (2) along its cross-direction.

2. A package as claimed in claim 1 wherein said package comprises a wrapper (8), overlaying said non-corrugated planar stiffener (1).

3. A package as claimed in claim 1 or claim 2 wherein the angle of said ribs (2) with the cross-direction of said stiffener is from 0° to 45°.

4. A package as claimed in any one of the preceding claims wherein the angle of said ribs (2) with the cross-direction of said stiffener is from 0° to 30°.

5. A package as claimed in any one of the preceding claims wherein the distance between the adjacent ribs (2) ranges from 0.5 mm to 2 mm.

6. A package as claimed in any one of the preceding claims wherein the cross-direction stiffness of said stiffener (1) is from 10 to 40 Taber Units.

7. A package as claimed in any one of the preceding claims wherein the grammage of said stiffener (1) is from 90 g/m² to 200 g/m².

8. A package as claimed in any one of the preceding claims wherein the thickness of said stiffener (1) is from 120 µm to 400 µm.

9. A package as claimed in any one of the preceding claims
wherein said stiffener (1) is made of paper, paper board, or polycoated paper.

10. A packaged detergent bar comprising a detergent bar wrapped in a package as claimed in any one of the preceding claims 1 to 9.

## Patentansprüche

1. Verpackung für einen Waschmittelriegel (3), die eine nicht wellige, ebene Versteifung (I) aufweist, die den Riegel entlang seiner longitudinalen Erstreckung umgeben kann, wobei die Versteifung eine Maschinenrichtung (11D) und senkrecht hierzu eine Querrichtung (CD) besitzt, **dadurch gekennzeichnet, dass** die Versteifung entlang ihrer Querrichtung mehrere Rippen (2) besitzt.

2. Verpackung nach Anspruch 1, wobei die Verpackung eine Umwicklung (8) umfasst, die über der nicht welligen, ebenen Versteifung (1) liegt.

3. Verpackung nach Anspruch 1 oder Anspruch 2, wobei der Winkel der Rippen (2) zu der Querrichtung der Versteifung im Bereich von 0° bis 45° liegt.

4. Verpackung nach einem der vorhergehenden Ansprüche, wobei der Winkel der Rippen (2) zu der Querrichtung der Versteifung im Bereich von 0° bis 30° liegt.

5. Verpackung nach einem der vorhergehenden Ansprüche, wobei der Abstand zwischen den benachbarten Rippen (2) im Bereich von 0,5 mm bis 2 mm liegt.

6. Verpackung nach einem der vorhergehenden Ansprüche, wobei die Querrichtungssteifigkeit der Versteifung (1) im Bereich von 10 bis 40 Taber-Einheiten liegt.

7. Verpackung nach einem der vorhergehenden Ansprüche, wobei das Quadratmetergewicht der Versteifung (1) im Bereich von 90 g/m² bis 200 g/m² liegt.

8. Verpackung nach einem der vorhergehenden Ansprüche, wobei die Dicke der Versteifung (1) im Bereich von 120 µm bis 400 µm liegt.

9. Verpackung nach einem der vorhergehenden Ansprüche, wobei die Versteifung (1) aus Papier, aus Pappe oder aus mit Poly beschichtetem Papier hergestellt ist.

10. Verpackter Waschmittelriegel, der einen in eine Verpackung nach einem der vorhergehenden Ansprüche 1 bis 9 eingewickelten Waschmittelriegel umfasst.

## Revendications

1. Emballage pour un pain de détergent (3) comprenant un raidisseur planaire non ondulé (1) qui est adapté pour entourer le pain le long de l'étendue longitudinale de celui-ci, ledit raidisseur ayant un sens machine (MD) et perpendiculaire à celui-ci un sens travers (CD), **caractérisé en ce que** ledit raidisseur comporte une pluralité de nervures (2) le long de son sens travers.

2. Emballage selon la revendication 1, dans lequel ledit emballage comprend un matériau d'enveloppement (8), recouvrant ledit raidisseur planaire non ondulé (1).

3. Emballage selon la revendication 1 ou la revendication 2, dans lequel l'angle desdites nervures (2) avec le sens travers dudit raidisseur est compris entre 0 et 45°.

4. Emballage selon l'une quelconque des revendications précédentes, dans lequel l'angle desdites nervures (2) avec le sens travers dudit raidisseur est compris entre 0 et 30°.

5. Emballage selon l'une quelconque des revendications précédentes, dans lequel la distance entre les nervures adjacentes (2) varie entre 0,5 et 2 mm.

6. Emballage selon l'une quelconque des revendications précédentes, dans lequel la rigidité dans le sens travers dudit raidisseur (1) est comprise entre 10 et 40 unités Taber.

7. Emballage selon l'une quelconque des revendications précédentes, dans lequel le grammage dudit raidisseur (1) est compris entre 90 et 200 g/m².

8. Emballage selon l'une quelconque des revendications précédentes, dans lequel l'épaisseur dudit raidisseur (1) est comprise entre 120 et 400 µm.

9. Emballage selon l'une quelconque des revendications précédentes, dans lequel ledit raidisseur (1) est composé de papier, de carton ou de papier multicouche.

10. Pain de détergent emballé comprenant un pain de détergent emballé dans un emballage selon l'une quelconque des revendications 1 à 9.
